Europäisches Patentamt

European Patent Office

Office européen des brevets

(19)

(11) EP 1 026 836 A1

(12) EUROPEAN PATENT APPLICATION

(43) Date of publication:
09.08.2000 Bulletin 2000/32

(51) Int Cl.7: H04B 7/26

(21) Application number: 99300192.4

(22) Date of filing: 12.01.1999

(84) Designated Contracting States:
AT BE CH CY DE DK ES FI FR GB GR IE IT LI LU
MC NL PT SE
Designated Extension States:
AL LT LV MK RO SI

(71) Applicant: LUCENT TECHNOLOGIES INC.
Murray Hill, New Jersey 07974-0636 (US)

(72) Inventor: Novakov, Emil P.
81541 München (DE)

(74) Representative:
Watts, Christopher Malcolm Kelway, Dr. et al
Lucent Technologies (UK) Ltd,
5 Mornington Road
Woodford Green Essex, IG8 0TU (GB)

(54) **Method and apparatus for detecting a constant frequency part of a telecommunication signal**

(57) In a method for detecting a constant frequency part of a telecommunication signal (T[n]), at least a portion of said telecommunication signal (T[n]) is received and stored, a plurality of similarity values is determined (38), each similarity value (S[n]) being indicative of a degree of similarity between a first and a second section of said telecommunication signal (T), said first and said second section being displaced by a varying displacement, and the presence of said constant frequency part of said telecommunication signal is determined (42 - 52) on the basis of said similarity values (S[n]). An apparatus and a mobile telephone comprise corresponding features. Using the invention, a constant frequency part of a telecommunication signal (T[n]) may be detected in a fast and reliable way.

Fig. 2

EP 1 026 836 A1

Printed by Jouve, 75001 PARIS (FR)

## Description

The present invention concerns the field of telecommunications and in particular the field of mobile radio transmission systems like, for example, cellular digital mobile telephones. The invention is applicable in all kinds of wireless and wire-bound systems in which a constant frequency part of a telecommunication signal must be detected. This especially concerns systems in which the exact frequency of the constant frequency part is not known in advance. A typical example of the application of the present invention is for detecting the frequency correction burst (FCB) used in the GSM mobile telephone system.

The GSM mobile telephone system is well known. A cellular network according to the GSM standard comprises a plurality of fixed base stations and a plurality of mobile stations. For data transmission in the direction from the base stations to the mobile stations (downlink), a frequency range of 935-960 MHz is used, which is divided into 124 channels of 200 kHz each. Each base station uses only a subset of these 124 channels in order to avoid interference with neighboring base stations. Within this subset, one radio frequency channel (called the BCCH carrier or C0) is assigned to each base station to carry synchronization and other information.

The information sent on the radio frequency channels (including C0) is grouped into time division multiple access (TDMA) frames. Each TDMA frame has a duration of 4.615 ms and is divided into eight timeslots of 577 μs each. Each timeslot, in turn, is divided into 156.25 bit periods. The timeslot is used to transmit a so-called burst, which is a period of the radio frequency carrier modulated in accordance with 147 data bits (followed by a guard period of 8.25 bit lengths). Different types of bursts are defined, among them a normal burst (NB) used for general data transmission and a frequency correction burst (FCB).

The frequency correction burst is transmitted in the first timeslot of every tenth frame in the C0 radio frequency channel assigned to a base station. It contains a sequence of 148 data bits with state "0". As a consequence of the Gaussian minimum phase shift keying (GMSK) modulation method used in GSM, this burst is equivalent to an unmodulated carrier with a frequency offset of 67.7 kHz above the nominal carrier frequency.

When a frequency correction burst is received in the mobile station, the corresponding baseband signal produced by the demodulator of the mobile station is a sine wave having a constant frequency. This frequency is 67.7 kHz if the mobile station is synchronized in frequency with the base station. However, before this synchronization has taken place, the received FCB frequency will be in the range of $67.7 \pm 10$ kHz for the standard GSM system (900 MHz band) or in the range of $67.7 \pm 20$ kHz for the DCS 1800 system (GSM system in the 1800 MHz band). This is because of the limited frequency stability of the internal quartz oscillator in the mobile station, which is about 10 ppm. Further information about GSM signal transmission can be found in the applicable GSM standards, in particular in Recommendation GSM 05.02 (version 3.8.0 of December 1995), which is incorporated herein by reference.

Transmission of the FCB serves several purposes. When a mobile station is handed off from one base station to another, the FCB is used to synchronize the frequency and timeslot boundaries of the sender/receiver of the mobile station to that of the new base station. The FCB is also used to determine and compensate slow frequency variations in the mobile station, which may be caused by a varying supply voltage or by temperature variations or by the Doppler effect. During the acquisition phase (i.e. when a mobile station searches for a new base station), incoming FCBs are detected in order to identify each available base station and to determine its usable signal strength.

Detecting the FCBs is especially difficult in the acquisition phase when no information about the surrounding base stations is available. A plenitude of possibilities must be considered since the C0 radio frequency channel, on which the FCB is sent, may have any of the 124 available frequencies for each base station. Furthermore, due to the above-mentioned limited stability of the quartz oscillator in the mobile station, the signal to be detected may have a rather wide range of possible frequencies. The existence of Gaussian noise, co-channel and adjacent channel interference and fading further adds to the difficulties in detecting FCBs in a reliable and fast way.

EP 0 766 389 A1 (corresponding to US 5,724,657) discloses an adaptive frequency correction burst detector for GSM handset systems. The detector uses bandpass and notch filters to generate a filtered output. The coefficients of the notch filter are adaptively updated so that the filtered output becomes minimal. An FCB is assumed if the ratio between an error power determined from the filtered output and a signal power is below a threshold for a predetermined duration. The scanning and adaption process by means of a feedback loop requires a considerable amount of time.

US 5,416,800 discloses a mobile radio receiver including a recognition arrangement for searching the received signal for pulses of an FCB. In the recognition arrangement, the positions and heights of pulses in the received signal are determined, and a decision is made whether or not an FCB has been received.

US 5,241,688 discloses a method for frequency and timeslot synchronization using FCBs. A received signal is filtered by an adaptive bandpass filter, and the presence of a tone is detected.

US 5,748,680 discloses a coarse frequency burst detector for a wireline communications system in which orthogonal components derived from a baseband signal are separately filtered, and the magnitudes of the separately filtered components are constructively combined.

It is an object of the present invention to avoid at least some of the problems associated with the prior art and to provide a way of detecting a constant frequency part of a telecommunication signal which works fast and reliable and preferably also requires little hardware and/or computing power. More particularly, it is desired to detect the constant frequency part even if its frequency and amplitude (or that of a carrier signal) are not exactly known in advance.

This objective is achieved by a method having the features of claim 1, an apparatus having the features of claim 9 and a mobile telephone having the features of claim 10. The dependent claims define preferred embodiments of the present invention. The enumeration of steps in the method claims does not imply a restriction in the order or way of execution. In different implementations of the invention, these steps may be performed in any order or in a parallel or interleaved fashion.

The present invention is based on the idea to determine a plurality of similarity values from the telecommunication signal, each of the similarity values being indicative of a degree of similarity between a first and a second section of the telecommunication signal. The displacement of said two sections of the telecommunication signal varies for some or all of the similarity values. The presence of the constant frequency part, e.g. the FCB, is determined on the basis of the similarity values. Thus some kind of self-similarity analysis is performed, which is preferably independent of any exact frequency and/or amplitude parameters.

The present invention provides high performance in some or all of the following respects. Using the invention, an FCB can be detected very quickly since no scanning of the entire possible frequency range and no adaptive updating of a filter is necessary. A single FCB can be detected without any need for averaging. This results in short acquisition times. In the context of a GSM system, it is necessary to detect the FCB in only one burst period (577 µs). Since no special filter is required, problems in the prior art in connection with phase distortion introduced by the filter are avoided. The present invention further offers superior accuracy and performance in the presence of noise or interference (e.g. co-channel and/or adjacent channel interference) or fading. The reliability of the detection is independent of the amplitude of the received signal and/or of a frequency shift. In the context of mobile telephones, no special hardware is needed for implementing the present invention (although such hardware may be provided).

The telecommunication signal can be any kind of signal in which the presence of a constant frequency part should be determined. In this context, the word "part" may denote a temporal section and/or an additive signal component of the telecommunication signal. In preferred embodiments, the telecommunication signal is a digital and/or wireless mobile telephony signal and preferably a GSM baseband signal. In the terminology of the present specification, DCS is considered as an instance of a GSM system.

A variety of criteria may be employed, alone or in combination, for the analysis of the similarity values. It is preferred to evaluate a degree of periodicity and/or the amplitude and/or the time between successive periods of the similarity values in some way. Advantageously peaks of the similarity values may be determined and the number and/or spacing and/or value of these peaks may be evaluated.

A preferred embodiment of the present invention is implemented in a digital way, e.g. by a suitably programmed digital signal processor. The telecommunication signal will then be sampled, and the samples will be stored in at least one buffer at least temporarily. For determining each similarity value, a cross-correlation of the two sections of the telecommunication signal may be evaluated, each section comprising a predetermined number of sampling points. Preferably, one of these two sections is shifted by one sampling point for the calculation of each successive similarity value. In other preferred embodiments, some or all steps mentioned above are implemented by hardware. For example an Application Specific Integrated Circuit (ASIC) or a Field Programmable Gate Array (FPGA) may be used.

It is preferred to determine only a predetermined number of similarity values in a row. Such an active phase may be followed by intervals longer or shorter than the active phase in order to lower the processing load.

In preferred embodiments the similarity values are further used to estimate the frequency of the FCB (relative to the internal reference frequency of the mobile station). This estimate can be used for synchronizing the frequency of the mobile station with that of the base station. For the estimation process the time intervals between subsequent peaks or other reference points in the similarity values may be determined and preferably averaged over a plurality of cycles. The frequency measurement may thus be relatively independent of noise in the received telecommunication signal.

Preferred embodiments of the apparatus and/or the mobile telephone of the present invention also comprise features corresponding to the features described above and/or mentioned in the dependent method claims.

Several sample embodiments of the present invention will now be described in more detail. Reference is made to the schematic drawings, in which:

Fig. 1 is a block diagram of a GSM mobile telephone,

Fig. 2 is a flow chart of a sample embodiment of the method of the present invention,

Fig. 3a and Fig. 3b represent telecommunication signals for a frequency correction burst and a normal burst, respectively, both under noise-free conditions,

Fig. 3c and Fig. 3d represent similarity values derived from the telecommunication signals of Fig. 3a and Fig. 3b, respectively,

Fig. 3e and Fig. 3f show enlarged representations of similarity values comparable to that of portions A and B of Fig. 3c and Fig. 3d, respectively,

Fig. 4a to Fig. 4d correspond to Fig. 3a to Fig. 3d, respectively, under conditions with additive white Gaussian noise (AWGN),

Fig. 5a to Fig. 5d correspond to Fig. 3a to Fig. 3d, respectively, under conditions with co-channel interference, and

Fig. 6 shows a graph of the recognition probability obtained in a sample embodiment of the present invention with varying signal/noise ratios.

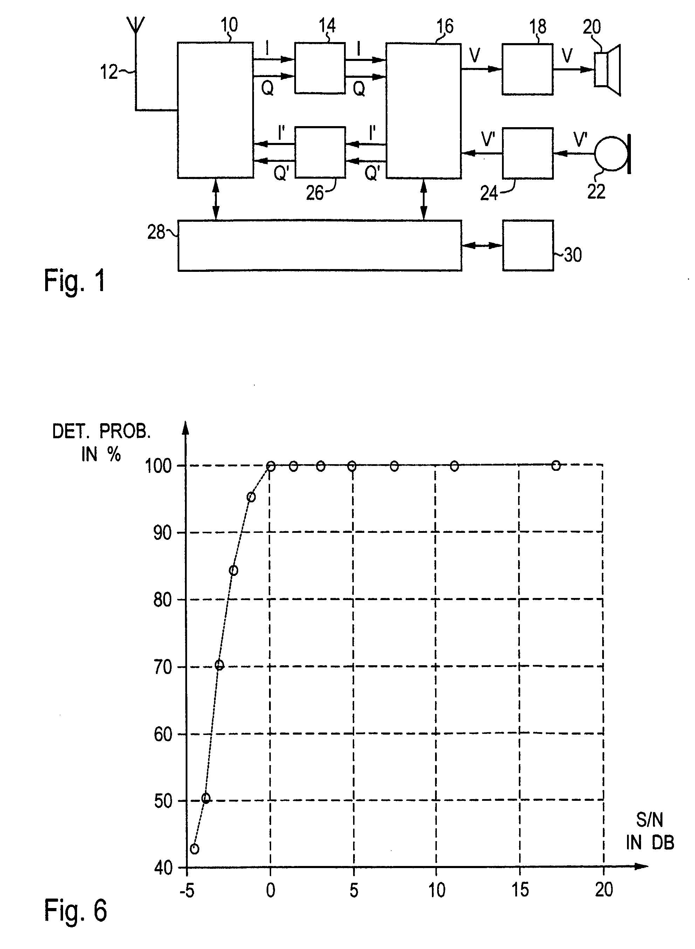

The block diagram of Fig. 1 depicts essential components of a mobile GSM telephone apparatus. The radio frequency signal is received by an RF module 10 via an antenna 12. After two intermediate frequency stages, two demodulated, analog baseband signals representing an in-phase component I and a quadrature component Q are generated. In the presently described embodiment, the analog I and Q signals are sampled and digitized with a sampling rate of 270.3 kHz (1 sample every 3.7 µs) by an analog-to-digital converter (ADC) 14. Another sampling rate, for example 540.6 kHz, may be used in alternative embodiments employing oversampling.

The digitized I and Q signals produced by the ADC 14 are fed into a digital signal processor (DSP) 16. The DSP 16 is programmed to perform all the signal processing tasks needed in the GSM system (voice encoding/decoding, channel encoding/decoding, synchronization, equalization, and so on) according to the GSM standard. The DSP 16 produces a digital voiceband signal V, which is converted into analog form by a digital-to-analog converter (DAC) 18 and is output by a loudspeaker 20.

The return path also shown in Fig. 1 is of less interest in connection with the present invention. Briefly, a voiceband signal V' from a microphone 22 is digitized by an ADC 24 and processed and encoded by the DSP 16, thus producing I' and Q' signal components. A DAC 26 converts the digital components I', Q' into corresponding analog signals, which are fed into the RF module 10. There the I' and Q' signals are modulated onto a carrier and sent via the antenna 12.

A control module 28, which may comprise a programmed microprocessor, controls operation of the RF module 10 and the DSP 16 and communicates with an interface unit 30. The interface unit 30 in turn comprises elements like a display and a keypad for interfacing with the user of the mobile telephone.

The circuit shown in the block diagram of Fig. 1 can be implemented using a variety of chipsets, which are commercially available from several manufacturers. At the block diagram level shown in Fig. 1, the circuit is used both in prior art mobile telephones and in telephones according to the present invention. The only difference is that the DSP 16 and/or the control module 28 are programmed differently. In alternative embodiments of the invention, dedicated hardware (e.g. an ASIC or a FPGA), which is not present in prior art telephones, is used to implement at least some of the functions performed by software in the present sample embodiment.

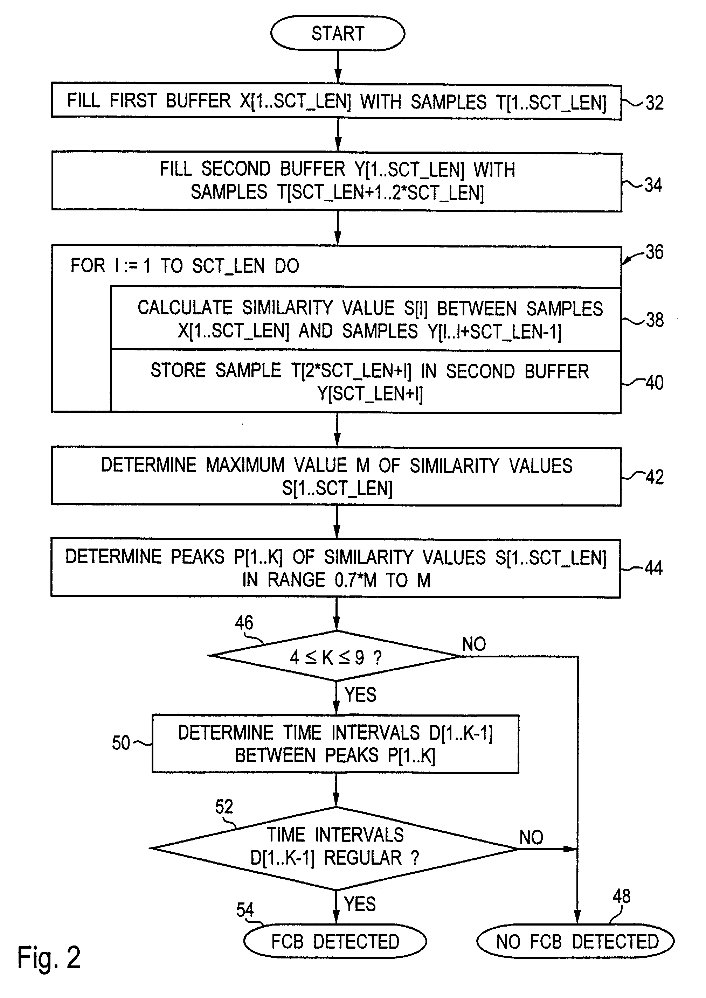

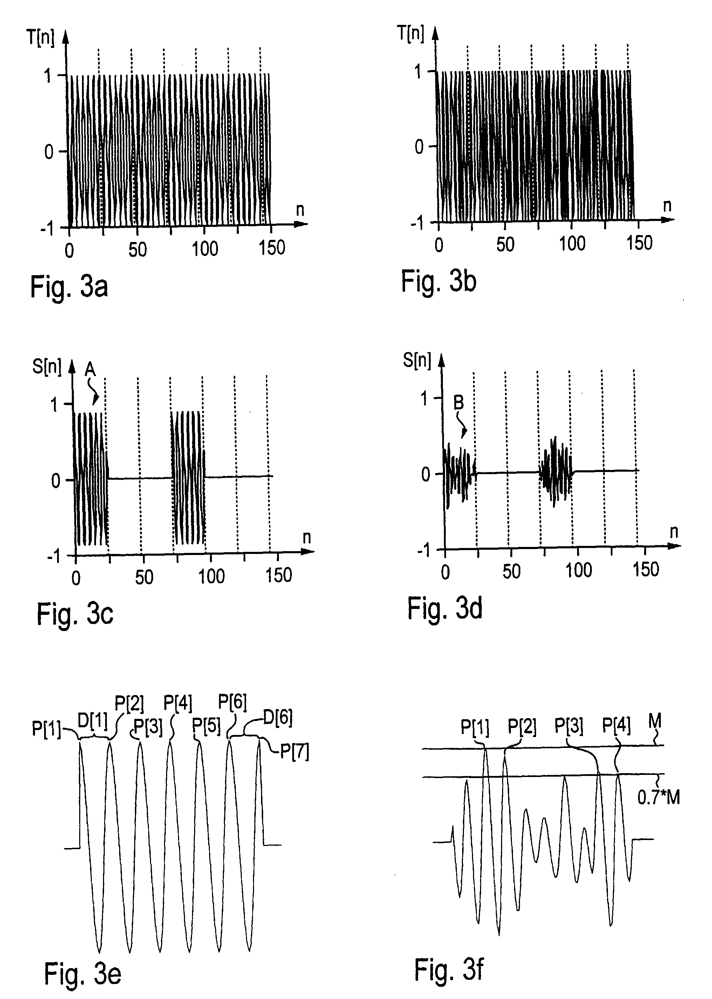

Before turning to Fig. 2, reference is made to Fig. 3a and Fig. 3b. These figures each show schematically the sampling values T[n] of a telecommunication signal T for about 150 sampling points n. For sake of clarity, further intermediate points have been calculated, and the sampling values and the intermediate points are shown as a continuous signal. In the present embodiment, the telecommunication signal T is a digital, demodulated GSM baseband signal, namely either the in-phase component I or the quadrature component Q output by the ADC 14 (Fig. 1). The actual choice does not matter since the two components I, Q are both sinusoidal (with a 90° phase shift) when an FCB is received. In alternative embodiments, other analog or digital signals are used as the telecommunication signal T.

Since the samples provided by the ADC 14 are used in the present embodiment, the sampling frequency is 270.3 kHz, and Fig. 3a and Fig. 3b each show the telecommunication signal T during a full burst of about 577 µs. The signal of Fig. 3a is a frequency synchronization burst, and that of Fig. 3b is a normal burst. The vertical dotted lines in Fig. 3a and Fig. 3b delineate sections of 24 samples each.

Fig. 3c and Fig. 3d show the similarity values S[n] derived from the samples T[n] of Fig. 3a and Fig. 3b, respectively. Again intermediate points have been calculated, and a continuous signal is shown instead of discrete points for sake of clarity. The index n of each similarity value S[n] is just used to enumerate the successive similarity values S[n]. When the actual computation process is considered, similarity value S[n] is calculated with a substantial time offset to the corresponding sampling value T[n]. In the present embodiment, for example, similarity value S[n] is only determined after the sampling values up to T[n+48] (i.e., those of two more sections) have been obtained.

It is further shown in Fig. 3c and Fig. 3d that the calculation of the similarity values only occurs during predetermined active phases, for example only in one out of three sections of 24 samples each. This measure saves computation power while still offering sufficient speed and accuracy. In alternative embodiments, a continuous calculation of the similarity values or a different proportion and/or length of the active phases is used.

The enlarged representations of Fig. 3e and Fig. 3f show the similarity values S[n] at portions A and B of Fig. 3c and Fig. 3d, respectively, i.e. in the range of n = 1 to n = 24. Even more intermediate values, which are not calculated in the actual implementation, are represented by the signal curves of Fig. 3e and Fig. 3f. The similarity values S[n] of Fig. 3e and Fig. 3f are different from that shown in Fig. 3c and Fig. 3d, but both have been obtained under comparable conditions and are equally representative for the operation of the present embodiment.

References P[1] .. P[7] of Fig. 3e and Fig. 3f denote peaks of the similarity values S[n], and D[1] .. D[6] (only D[1] and D[6] are shown in Fig. 3e) express the time intervals between each pair of successive peaks P[1] .. P[7]. The maximum value of all similarity values S[n] is denoted by M in Fig. 3f, and the horizontal line labeled 0.7*M is a threshold 30 % below this maximum value M.

The flow diagram of Fig. 2 will now be described in detail. It depicts the method steps of the present sample embodiment. One parameter of the flow diagram is SCT_LEN, which denotes the length of the sections of the telecommunication signal T which are compared for obtaining each similarity value S[n]. The value of SCT_LEN is 24 in the present embodiment, but of course any alternative value can be chosen. For sake of convenience the method of Fig. 2 is assumed to start at sample value T[1]. The method is implemented by the DSP 16 (Fig. 1) executing a suitable software module.

In a first step 32, a first buffer X, which is part of a memory associated with DSP 16 (Fig. 1), is filled with the first SCT_LEN samples T[1] .. T[24] of the telecommunication signal T. The subsequent SCT_LEN samples T[25] .. T[48] are now stored in a second buffer Y in step 34 (further samples will be stored in subsequent locations of the second buffer Y in the further steps of the method). Thus the initial offset of the two sections to be compared for obtaining the first similarity value is equal to one section length. In alternative embodiments other initial offsets are chosen. The notion of two separate buffers X, Y is used herein for purposes of explanation. Of course, in an actual implementation these logical buffers X, Y may be mapped onto the physical memory in any suitable way.

In a following program loop 36 the individual similarity values S[i] of one active phase are calculated. These are 24 (i.e., SCT_LEN) similarity values in the present embodiment, but of course longer or shorter active phases can alternatively be used. There is no requirement of the length of the active phase being equal to the section length.

In step 38 of program loop 36, similarity value S[i] is calculated on the basis of a comparison of the first and the second sections of the telecommunication signal T. The second section is "moved to the right" in each cycle of program loop 36. Thus the initial offset of the two sections is increased by one sampling value in each cycle. In other words, similarity value S[i] is calculated using sampling values T[1..24] on the one hand and T[i+24..i+47] on the other hand, where i = 1..24 in the presently described example embodiment.

For calculating a similarity value of two sections of the telecommunication signal T, the cross-correlation value of these sections is determined in the present sample embodiment. The cross-correlation value of two sections is defined as the sum of the products of each pair of corresponding elements in the sections. More formally, let T[x..x+s] be the first section and T[y..y+s] be the second section. Then the cross-correlation value is:

$$\sum_{j=0}^{s} \texttt{T[x+j]} \cdot \texttt{T[y+j]} \ .$$

In alternative embodiments other types of similarity values can be used, for example the sum of squared sums of corresponding elements:

$$\sum_{j=0}^{s} \texttt{|T[x+j]+T[y+j]|}^{2} \ ,$$

or simply the sum of absolute values of all elements:

$$\sum_{j=0}^{s} \texttt{|T[x+j]|+|T[y+j]|} \ .$$

All in all, in the present sample embodiment each similarity value S[i] is calculated as:

$$S[i] = \sum_{j=1}^{SCT\_LEN} X[j] \cdot Y[i+j-1] \quad (for\ i = 1..SCT\_LEN).$$

After this calculation a further sample of the telecommunication signal T is stored in the second buffer Y in step 40 at the next free position. This is necessary in order to have the required sampling data in the next cycle of program loop 36. After completion of the loop 36, the second buffer Y will contain a total of 48 samples T[25] .. T[72]. Because the storage capacity of the second buffer Y is twice as much as that of the first buffer X, it is not necessary to shift the contents of the second buffer Y, which would be a very time-consuming operation.

The subsequent steps of the flowchart of Fig. 2 concern the further processing of the obtained similarity values S[n]. In actual implementations of the method, these steps may be interleaved with the steps described so far in order to provide an even distribution of the required computing power.

First, in step 42, the maximum value M of all similarity values S[n] determined in the present active phase is computed. The next step 44 concerns the finding of (relative) peaks in the similarity values S[n]. In the present sample embodiment, only positive values are considered, and a peak is assumed if a similarity value S[n] fulfils the inequation $w*M \leq S[n]$, where w is a constant denoting the detection window. In the presently described sample embodiment, w is about 0.7, i.e. the detection window is about 30 % of the maximum amplitude, and a peak is detected if the similarity value S[n] is at most 30 % less than the (absolute) maximum value M. The width of this 30 % range is the only "arbitrary" coefficient of the method of the present embodiment. Because it is expressed relative to the maximum amplitude, the presently described method is independent of the amplitude of the processed telecommunication signal. In alternative embodiments other widths of the detection window and/or other ways of determining the peaks are used. For example, a (relative) peak could be found by comparison of the peak value with the surrounding similarity values S[n].

The peaks found in step 44 are designated P[1] .. P[k], such that k denotes the number of peaks in the present active phase. In Fig. 3e, seven peaks P[1] .. P[7] have been found, and four peaks P[1] .. P[4] are detected in Fig. 3f. It is now tested in step 46 whether or not the number of peaks k falls into a predetermined range. This range depends on the length of the active phase and on the possible frequencies of the constant frequency signal to be detected. In the present embodiment, where similarity values S[n] are calculated for about 88.6 μs and a sine tone of 67.7 ± 20 kHz is to be detected, six or seven peaks should be present. Taking into account possible deviations of ± 20 kHz for the FCB frequency, a range of $4 \leq k \leq 9$ is acceptable. If there are less than 4 peaks, the similarity values S[n] are not regular enough, and if there are more than 9 peaks, there is too much noise present. In both cases, the execution of the method of Fig. 2 will stop in state 48 with the indication that no FCB has been found.

For the normal burst signal of Fig. 3b and the similarity values derived therefrom in Fig. 3d and Fig. 3f, four peaks P[1] .. P[4] are detected, which is just within the acceptable range. In alternative embodiments, other peak number ranges are used, for example the range $5 \leq k \leq 9$.

If the number k of peaks P[1] .. P[k] is within the acceptable range, the time intervals D[1] .. D[k-1] between each pair of subsequent peaks will be determined in step 50. For example, time intervals D[1] and D[6] are shown in Fig. 3e.

It is then tested in step 52 whether or not the time intervals D[1] .. D[k-1] are sufficiently regular. In the present sample embodiment, this is assumed if the differences of each two subsequent time intervals are at most ± 10 μs. If this condition is fulfilled, execution of the method of Fig. 2 ends in state 54 with the indication that an FCB has been detected. Otherwise, no FCB is reported (state 48). Clearly, the FCB shown in Fig. 3a will be identified correctly from the similarity values of Fig. 3c and Fig. 3e. In contrast thereto, no FCB is detected for the similarity values of Fig. 3f since the time interval between peaks P[2] and P[3] (designated D[2]) is too long in comparison with the time interval between peaks P[1] and P[2] (designated D[1]).

Method steps 42 - 52 require little computation time. Thus, in a sample implementation, step 32 may take the first 24 sampling intervals, step 34 may take sampling intervals 25 - 48, and program loop 36 may be performed during sampling intervals 49 to 72. The evaluation of the determined similarity values can be performed very quickly, such that the method of Fig. 2 may be re-started with step 32 in sampling interval 73 (storing T[73] as the first element in the first buffer X). This means that in each period of 72 sampling intervals, there is an active phase of 24 sampling intervals in which 24 similarity values are obtained. Such a schedule, which is shown in Fig. 3c and Fig. 3d, provides a good balance between high speed of detection of the FCB and low load on the DSP 16 (Fig. 1).

In the above-mentioned and other embodiments of the present invention, the frequency of an FCB (relative to the internal reference frequency of the mobile station) is estimated after detection of the FCB. The estimate is based on an averaging of the time intervals D[1] .. D[k-1] between each pair of subsequent peaks P[1] .. P[k], wherein k is the number of detected peaks. The reciprocal value of the average period TP of the similarity values is the estimated frequency f according to the following formula:

$$1/f \ = \ TP \ = \ (\sum_{j=1}^{k-1} D[j])/(k-1) \ .$$

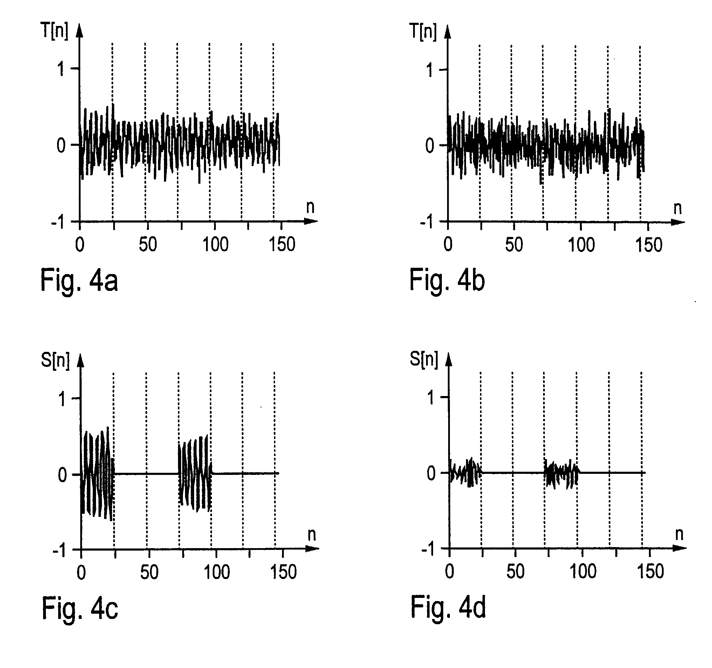

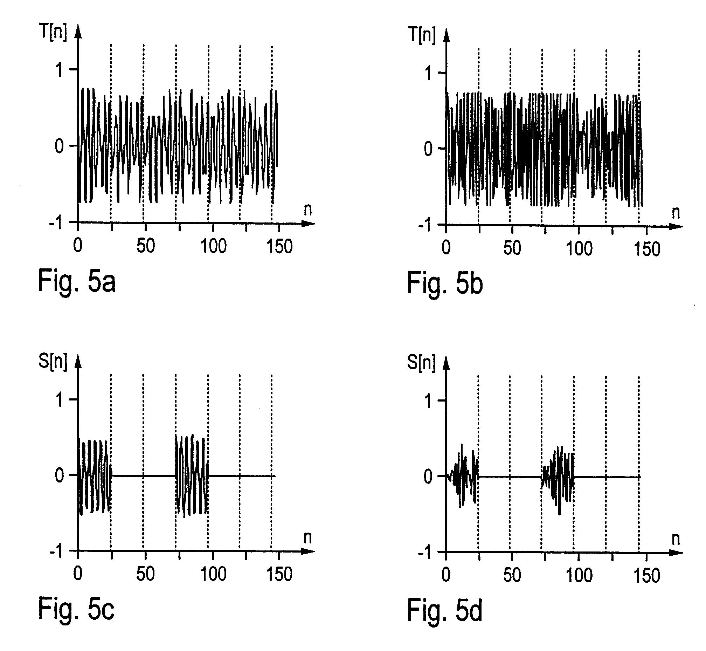

Fig. 3a to Fig. 3d show theoretical signal conditions without any noise. Fig. 4a to Fig. 4d depict the corresponding signals when the telecommunication signal T contains additive white Gaussian noise with a signal/noise ratio of 1.1 dB. Although hardly any difference can be seen in the signals of Fig. 4a and Fig. 4b, the similarity values derived therefrom are clearly discernible (Fig. 4c and Fig. 4d). Consequently the presence of an FCB can be detected with a high degree of accuracy. The same holds under conditions with strong co-channel interference (CCI). Corresponding signal curves for a 6 dB signal/CCI ratio are shown in Fig. 5a to Fig. 5d.

The high performance of the present invention is further demonstrated by Fig. 6. Here the probability of a correct positive detection of an FCB is shown for several signal/ noise ratios of Gaussian noise. For each signal/noise ratio, 1000 different simulated bursts were evaluated. The probability of a false positive detection was below 0.1 % in all cases. It is apparent from Fig. 6 that a 100 % detection quality has been obtained even for very noisy signals with a signal/noise ratio of 0 dB. This is in contrast to prior art methods and systems which typically require a signal/noise ratio better than 11 dB for satisfactory operation.

Similar calculations have also been performed for the case of co-channel interference (CCI). In this respect the detection probability reached 100 % for a signal/CCI ratio better than 6 dB.

## Claims

1.   A method of detecting a constant frequency part of a telecommunication signal (T; I, Q), in particular a frequency correction burst (FCB), said method comprising the steps of:

   a) receiving and storing (32, 34, 40) at least a portion of said telecommunication signal (T; I, Q),
   b) determining (38) a plurality of similarity values (S[n]), each similarity value (S[n]) being indicative of a degree of similarity between a first and a second section of said telecommunication signal (T), said first and said second section being displaced by a varying displacement,
   c) determining (42 - 52) the presence of said constant frequency part of said telecommunication signal (T; I, Q) on the basis of said similarity values (S[n]).

2.   The method of claim 1,
   characterized in that the presence of said constant frequency part is determined on the basis of at least one of the following criteria:

   -   degree of periodicity of said similarity values (S[n]),
   -   amplitude of said similarity values (S[n]),
   -   duration of each period of said similarity values (S[n]),
   -   number of periods within said similarity values (S[n]),
   -   regularity of time intervals between subsequent periods of said similarity values (S[n]),
   -   duration of time intervals between subsequent peaks (P[1..k]) of said similarity values (S[n]),
   -   number of peaks (P[1..k]) within said similarity values (S[n]),
   -   regularity of time intervals between subsequent peaks (P[1..k]) of said similarity values (S[n]), and
   -   amount of deviation of peaks (P[1..k]) of said similarity values (S[n]) from a maximum value (M) of said similarity values (S[n]).

3.   The method of claim 1 or claim 2,
   characterized in that, in step a), a plurality of samples (T[n]) of said telecommunication signal (T; I, Q) are determined and stored in at least one buffer (X, Y).

4.   The method of claim 3,
   characterized in that said first and said second section of said telecommunication signal (T; I, Q) each comprise a predetermined number of sampling points (T[n]), and/or in that said displacement between said first and said second section varies by one sampling point between subsequent similarity values (S[n]).

5.   The method of claim 4,

characterized in that the interval between two successive sampling points (T[n]) is between 1 µs and 10 µs and preferably about 3.7 µs, and/or in that the number of sampling points (T[n]) in each of said sections is between 10 and 100 and preferably about 24.

6. The method of one of claims 1 to 5,
   characterized in that said similarity values (S[n]) are only determined during predetermined phases, whose proportion of the total time preferably is between 1/2 to 1/10 and more preferably about 1/3.

7. The method of one of claims 1 to 6,
   characterized in that each similarity value (S[n]) is a cross-correlation value between said first and said second section of said telecommunication signal (T; I, Q), and/or in that said telecommunication signal (T; I, Q) is a wireless mobile telephony signal and preferably a GSM baseband signal.

8. The method of one of claims 1 to 7,
   characterized in that a frequency value of said constant frequency part of said telecommunication signal (T; I, Q) is estimated on the basis of time intervals between subsequent periods and/or subsequent peaks (P[1..k]) of said similarity values (S[n]).

9. An apparatus for detecting a constant frequency part of a telecommunication signal (T; I, Q), in particular employing the method recited in one of claims 1 to 9, said apparatus comprising:

   a) a module for receiving and storing (32, 34, 40) at least a portion of said telecommunication signal (T; I, Q),
   b) a module for determining (38) a plurality of similarity values (S[n]), each similarity value (S[n]) being indicative of a degree of similarity between a first and a second section of said telecommunication signal (T), said first and said second section being displaced by a varying displacement,
   c) a module for determining (42 - 52) the presence of said constant frequency part of said telecommunication signal (T; I, Q) on the basis of said similarity values (S[n]).

10. A mobile telephone comprising the apparatus recited in claim 9.

Fig. 1

Fig. 6

START

FILL FIRST BUFFER X[1..SCT_LEN] WITH SAMPLES T[1..SCT_LEN] ~32

FILL SECOND BUFFER Y[1..SCT_LEN] WITH SAMPLES T[SCT_LEN+1..2*SCT_LEN] ~34

FOR I := 1 TO SCT_LEN DO ~36

CALCULATE SIMILARITY VALUE S[I] BETWEEN SAMPLES X[1..SCT_LEN] AND SAMPLES Y[I..I+SCT_LEN-1] ~38

STORE SAMPLE T[2*SCT_LEN+I] IN SECOND BUFFER Y[SCT_LEN+I] ~40

DETERMINE MAXIMUM VALUE M OF SIMILARITY VALUES S[1..SCT_LEN] ~42

DETERMINE PEAKS P[1..K] OF SIMILARITY VALUES S[1..SCT_LEN] IN RANGE 0.7*M TO M ~44

46 — 4 ≤ K ≤ 9 ? — NO

YES

50 — DETERMINE TIME INTERVALS D[1..K-1] BETWEEN PEAKS P[1..K]

52 — TIME INTERVALS D[1..K-1] REGULAR ? — NO

YES

54 — FCB DETECTED

48 — NO FCB DETECTED

Fig. 2

Fig. 3a

Fig. 3b

Fig. 3c

Fig. 3d

Fig. 3e

Fig. 3f

Fig. 4a

Fig. 4b

Fig. 4c

Fig. 4d

Fig. 5a

Fig. 5b

Fig. 5c

Fig. 5d

**EP 1 026 836 A1**

EUROPEAN SEARCH REPORT

Application Number

EP 99 30 0192

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 625 573 A (KIM IN-KYUNG) 29 April 1997 (1997-04-29) * column 3, line 66 - column 6, line 38 * --- | 1,3-5,9, 10 | H04B7/26 |
| A | US 5 267 264 A (SHLENKER ERHARD ET AL) 30 November 1993 (1993-11-30) * column 5, line 52 - column 6, line 63 * --- | 1,9 | |
| A | CHARBIT G ET AL: "Frame synchronisation and frequency-carrier estimation for GSM mobile communications" EPMCC '97. SECOND EUROPEAN PERSONAL MOBILE COMMUNICATIONS CONFERENCE TOGETHER WITH 3. ITG-FACHTAGUNG, MOBILE KOMMUNIKATION, BONN, GERMANY, 30 SEPT.-2 OCT. 1997, no. 145, pages 449-457, XP002105779 ITG-Fachberichte, 1997, VDE-Verlag, Germany ISSN: 0341-0196 * page 449, right-hand column, line 5 - page 450, left-hand column, line 19 * * page 450, right-hand column, line 30 - page 452, left-hand column, line 41 * ----- | 1-10 | |

TECHNICAL FIELDS SEARCHED (Int.Cl.7)

H04B
H04L

The present search report has been drawn up for all claims

| Place of search | Date of completion of the search | Examiner |
|---|---|---|
| THE HAGUE | 7 July 1999 | Larcinese, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

**ANNEX TO THE EUROPEAN SEARCH REPORT
ON EUROPEAN PATENT APPLICATION NO.**

EP 99 30 0192

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-1999

| Patent document cited in search report | | Publication date | Patent family member(s) | | Publication date |
|---|---|---|---|---|---|
| US 5625573 | A | 29-04-1997 | CA | 2170803 A | 02-09-1996 |
| | | | CN | 1140369 A | 15-01-1997 |
| US 5267264 | A | 30-11-1993 | DE | 4108806 C | 30-01-1992 |
| | | | EP | 0504546 A | 23-09-1992 |

EPO FORM P0459

For more details about this annex : see Official Journal of the European Patent Office, No. 12/82